# EUROPÄISCHE PATENTSCHRIFT

(11) **EP 2 795 743 B1**
(45) Veröffentlichungstag und Bekanntmachung des Hinweises auf die Patenterteilung: **17.08.2016**
(21) Anmeldenummer: 12780719.6
(22) Anmeldetag: 26.10.2012
(51) Int. Cl.: H01R 39/41, H01R 39/38, H02K 23/18, H02K 5/14, H02K 13/10, H02K 7/116

(54) **KOMMUTATORMOTOR**
COMMUTATOR MOTOR
MOTEUR À COMMUTATEUR

(30) Priorität: 23.12.2011 DE 102011089775
(43) Veröffentlichungstag der Anmeldung: 29.10.2014
(73) Patentinhaber: Robert Bosch GmbH, 70442 Stuttgart (DE)
(72) Erfinder: ANDING, Lars-Dirk, 72202 Nagold (DE)
(86) Internationale Anmeldenummer: PCT/EP2012/071266
(87) Internationale Veröffentlichungsnummer: WO 2013/091956

(56) Entgegenhaltungen:
- DE-T2-602005 003 500
- DE-T5-112006 002 126
- JP-A- 61 088 743
- US-A1- 2010 225 198

## Beschreibung

Die vorliegende Erfindung betrifft einen Kommutatormotor mit einem Kommutator, der einen an einer Kollektorlauffläche in Schleifkontakt mit zugeordneten Bürsten stehenden Kollektor aufweist, wobei mindestens eine Bürste in einem zugeordneten Bürstenhalter angeordnet ist.

Aus dem Stand der Technik sind derartige Kommutatormotoren bekannt, die zur Kommutierung ausgebildete Kommutatoren aufweisen. Diese haben einen an einer Kollektorlauffläche in Schleifkontakt mit zugeordneten Bürsten stehenden Kollektor, der an einem Rotor des Kommutatormotors vorgesehen ist. Über die in zugeordneten Bürstenhaltern in einem vorgegebenen Bürstenwinkel relativ zueinander angeordneten Bürsten, z. B. Kohlebürsten, und den Kollektor wird dem Kommutatormotor ein zum Betrieb erforderlicher Motorstrom zugeführt. Bei der Kommutierung derartiger Kommutatormotoren entstehen sogenannte "Stromrippel", die zur Bestimmung einer jeweiligen Drehstellung des Rotors verwendbar sind.

Nachteilig am Stand der Technik ist, dass die Bürstenhalter als rechteckige Kohleköcher mit vergleichsweise großen Toleranzen einer zugeordneten elektrischen Bürstenüberdeckung von Kohlebürste zu Kollektor ausgebildet sind, bei denen eine präzise und stabile Führung der Kohlebürsten nur eingeschränkt möglich ist, sodass ein durch die Kommutierung entstehendes Stromrippelsignal lediglich eine eingeschränkte Robustheit aufweist. Diese eingeschränkte Robustheit wird darüber hinaus im Verlauf der Lebensdauer der Kohlebürsten weiter reduziert, sodass ein jeweils im Betrieb des Kommutatormotors entstehendes Stromrippelsignal nur eingeschränkt zur präzisen Drehstellungsbestimmung des Rotors verwendbar ist. Die US 2010/0225198 A1 zeigt einen Kommutatormotor nach dem Oberbegriff von Anspruch 1.

### Offenbarung der Erfindung

Eine Aufgabe der Erfindung ist es daher, einen neuen Kommutatormotor bereitzustellen, bei dem durch eine verbesserte Führung der Bürsten in den Bürstenhaltern eine Erzeugung eines robusten Stromrippelsignals ermöglicht wird.

Dieses Problem wird gelöst durch einen Kommutatormotor nach Anspruch 1, mit einem Kommutator, der einen an einer Kollektorlauffläche in Schleifkontakt mit zugeordneten Bürsten stehenden Kollektor aufweist. Mindestens eine Bürste ist in einem zugeordneten Bürstenhalter angeordnet. Der Bürstenhalter weist mindestens einen in radialer Richtung des Kollektors ausgerichteten Führungssteg auf, der in mindestens eine an der mindestens einen Bürste vorgesehene Führungsnut eingreift.

Die Erfindung ermöglicht somit auf einfache Art und Weise eine im Wesentlichen spielfreie Führung der Bürste in dem Bürstenhalter und somit die Bereitstellung eines Kommutatormotors, bei dem im Betrieb eine Erzeugung eines Mindest-Stromrippelsignals, das zur zuverlässigen und präzisen Drehstellungsbestimmung für einen zugeordneten Rotor geeignet ist, gewährleistet ist.

Erfindungsgemäß weist der Bürstenhalter zwei laterale Führungsflächen auf, die zumindest über eine Auflagefläche miteinander verbunden sind, die zur Auflage der mindestens einen Bürste vorgesehen ist und an der bevorzugt mindestens ein erster in radialer Richtung des Kollektors ausgerichteter Führungssteg ausgebildet ist.

Somit kann die Bereitstellung einer stabilen und betriebssicheren Auflage für die Bürste in dem Bürstenhalter ermöglicht werden.

Erfindungsgemäß weist die Auflagefläche eine Durchgriffsöffnung auf.

Die Erfindung ermöglicht somit eine vereinfachte Herstellung des Bürstenhalters, der hierbei insbesondere durch Kunststoffspritzen unter Verwendung eines schieberlosen Spritzgusswerkzeugs als Spritzgussteil ausgebildet werden kann.

Erfindungsgemäß sind die zwei lateralen Führungsflächen über mindestens einen der Auflagefläche gegenüberliegenden Verbindungssteg miteinander verbunden, an dem bevorzugt mindestens ein zweiter in radialer Richtung des Kollektors ausgerichteter Führungssteg ausgebildet ist.

Somit kann eine zusätzlich verbesserte und robustere Führung der Bürste in dem Bürstenhalter erreicht werden.

Gemäß einer Ausführungsform ist dem Bürstenhalter mindestens ein Federelement zum Niederhalten der mindestens einen Bürste mit einer ersten vorgegebenen Federkraft in dem Bürstenhalter zugeordnet. Das Federelement greift vorzugsweise zumindest bereichsweise in die mindestens eine an der mindestens einen Bürste vorgesehene Führungsnut ein.

Somit kann ein Ausrutschen der Bürste aus dem Bürstenhalter auf einfache Art und Weise verhindert werden.

Das mindestens eine Federelement ist bevorzugt zur Beaufschlagung der mindestens einen Bürste mit einer zweiten vorgegebenen Federkraft in Richtung des Kollektors ausgebildet.

Somit kann die Bereitstellung eines Kommutatormotors ermöglicht werden, bei dem sowohl im Neuzustand als auch über die Lebensdauer der Bürste eine im Wesentlichen konstante Bürstenvorschubkraft und somit ein im Wesentlichen konstanter Bürstenanpressdruck am Kollektor erreicht werden.

Gemäß einer Ausführungsform weist das mindestens eine Federelement mindestens einen tangential zum Kollektor ausgerichteten Federkörper auf.

Die Erfindung ermöglicht somit die Bereitstellung eines robusten und stabilen Federelements, mit dem sicher und zuverlässig eine im Wesentlichen konstante Bürstenvorschubkraft und somit ein im Wesentlichen konstanter Bürstenanpressdruck der Bürste am Kollektor erreicht werden können.

An dem mindestens einen Federkörper sind bevorzugt ein erster Federarm zur Beaufschlagung der mindestens einen Bürste mit der ersten vorgegebenen Federkraft und ein zweiter Federarm zur Beaufschlagung der mindestens einen Bürste mit der zweiten vorgegebenen Federkraft vorgesehen.

Somit kann die Bereitstellung eines unkomplizierten und kostengünstigen Federelements ermöglicht werden.

Die mindestens eine Bürste weist bevorzugt an einem dem zweiten Federarm zugewandten axialen Ende eine Aufnahmenut zur zumindest abschnittsweisen Aufnahme des zweiten Federarms auf.

Somit kann eine von dem zweiten Federarm erzeugte Bürstenvorschubkraft sicher und zuverlässig auf die mindestens eine Bürste übertragen werden.

Das Eingangs genannte Problem wird auch gelöst durch eine Antriebsvorrichtung nach Anspruch 10, mit einem Kommutatormotor, der einen Kommutator aufweist, der mit einem an einer Kollektorlauffläche in Schleifkontakt mit zugeordneten Bürsten stehenden Kollektor versehen ist. Mindestens eine Bürste ist in einem zugeordneten Bürstenhalter angeordnet. Der Bürstenhalter weist mindestens einen in radialer Richtung des Kollektors ausgerichteten Führungssteg auf, der in mindestens eine an der mindestens einen Bürste vorgesehene Führungsnut eingreift.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Fig. 1 eine teilweise geschnittene Draufsicht auf eine Antriebsvorrichtung mit einem Kommutatormotor und einem Bürstenträger gemäß einer Ausführungsform,
Fig. 2 eine perspektivische Ansicht einer Anordnung mit dem Kommutator und dem Bürstenträger von Fig. 1, an dem zwei gemäß einer ersten Ausführungsform ausgebildete Bürstenhalter ausgebildet sind, in denen zugeordnete Bürsten angeordnet sind,
Fig. 3 eine Draufsicht auf die Anordnung von Fig. 2, und
Fig. 4 eine perspektivische Ansicht einer Anordnung mit dem Kommutator von Fig. 1 und zwei gemäß einer zweiten Ausführungsform ausgebildeten Bürstenhaltern, in denen die Bürsten von Fig. 2 und 3 angeordnet sind.

### Beschreibung der Ausführungsbeispiele

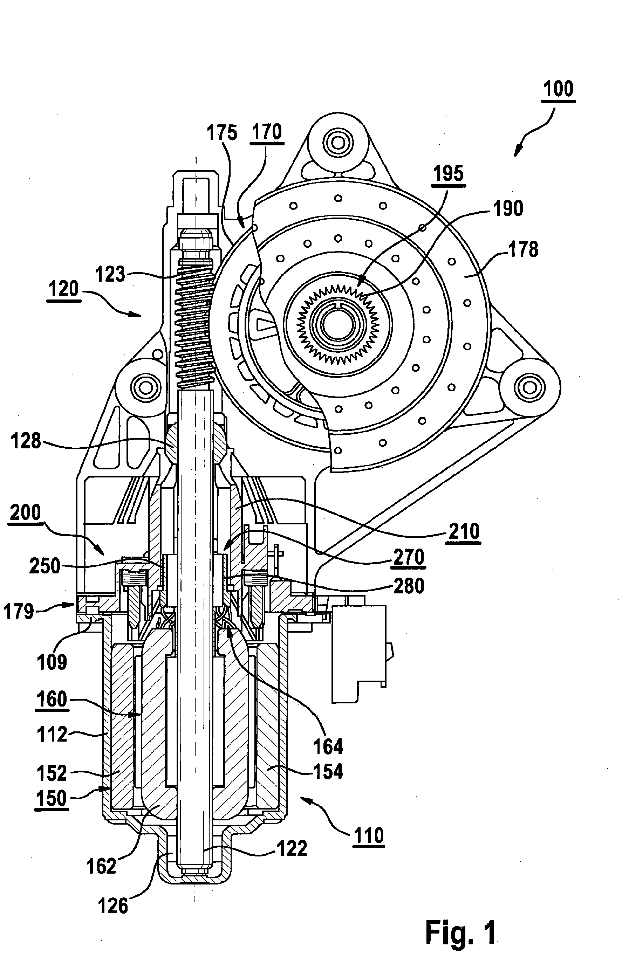

Fig. 1 zeigt eine beispielhafte Antriebsvorrichtung 100, die illustrativ einen Antriebsmotor 110 und ein mit diesem gekoppeltes Umsetzungsgetriebe 120 aufweist. Die Antriebsvorrichtung 100 findet bevorzugt Anwendung als Antrieb für einen elektrischen Fensterheber in einem Kraftfahrzeug. Es wird jedoch darauf hingewiesen, dass die Antriebsvorrichtung 100 nicht auf eine Verwendung für einen Fensterheber beschränkt ist, sondern bei einer Vielzahl von unterschiedlichen Stellantrieben Anwendung finden kann. Z. B. kann die Vorrichtung 100 alternativ bei Stellantrieben für Sitzversteller Anwendung finden.

Der Antriebsmotor 110 kann derart steuer- bzw. regelbar sein, dass sowohl ein Reversierbetrieb, als auch Vorgaben hinsichtlich einer gewünschten Drehgeschwindigkeit realisierbar sind. Beispielhaft ist dem Antriebsmotor 110 ein Motorgehäuse 112 zugeordnet, das einen Befestigungsflansch 109 aufweist. Dem Umsetzungsgetriebe 120 ist beispielhaft ein Getriebegehäuse 178 zugeordnet, das einen Befestigungsabschnitt 179 aufweist. Der Befestigungsflansch 109 des Motorgehäuses 108 ist illustrativ am Befestigungsabschnitt 179 des Getriebegehäuses 178 befestigt, z. B. verschraubt, vernietet, verschweißt, verklebt oder auf eine beliebige andere Art und Weise fixiert.

Illustrativ ist der Antriebsmotor 110 nach Art eines Kommutatormotors ausgebildet, der beispielhaft einen in dem Motorgehäuse 112 radial und axial unbeweglich angeordneten Stator 150 aufweist, der z. B. mit Permanentmagneten 152, 154 versehen ist. Im Inneren des Stators 150 ist ein mit mindestens einer Wicklung 162 versehener Rotor 160 angeordnet, der beispielhaft eine axial unbewegliche Rotorwelle 122 aufweist, die illustrativ in zugeordneten Wälzlagern 126, 128 drehbar gelagert ist.

Die Rotorwelle 122 weist illustrativ einen Gewindeabschnitt 123 auf, der zum Antrieb des Umsetzungsgetriebes 120 ausgebildet ist. Dieser greift beispielhaft in eine Außenverzahnung 175 eines dem Umsetzungsgetriebe 120 zugeordneten Antriebselements 170 ein, dass mit einem Abtriebselement 195 gekoppelt ist, das illustrativ eine Abtriebsaußenverzahnung 190 aufweist. Diese ist z. B. mit einem zu betätigenden Gestänge eines entsprechenden elektrischen Fensterhebers in einem Kraftfahrzeug gekoppelt, um dieses drehend anzutreiben.

Illustrativ ist eine Kommutierungsvorrichtung 200 zur Kommutierung des Kommutatormotors 110 vorgesehen, über die die Wicklung 162 des Rotors 160 derart bestromt wird, dass eine Drehung des Rotors 160 bzw. der Rotorwelle 122 in eine beliebige Drehrichtung bewirkt werden kann. Die Kommutierungsvorrichtung 200 weist illustrativ einen mit einem Kollektor 280 versehenen Kommutator 270 sowie einen als Spritzgussteil ausgebildeten Bürstenträger 210 auf, an dem mindestens eine Bürste 250 und bevorzugt zwei oder mehr Bürsten angeordnet sind. Der Kollektor 280 ist z. B. über flexible Leitungen 164 elektrisch leitfähig mit der Wicklung 162 verbunden, sodass dieser über die Bürste 250 und den Kollektor 280 ein geeigneter Motorstrom zuführbar ist.

Es wird jedoch darauf hingewiesen, dass die prinzipielle Funktionsweise und der Aufbau der Antriebsvorrichtung 100 aus dem Stand der Technik hinreichend bekannt sind. Deshalb wird hier zwecks Knappheit der Beschreibung auf eine weiterführende Beschreibung der Antriebsvorrichtung 100 verzichtet.

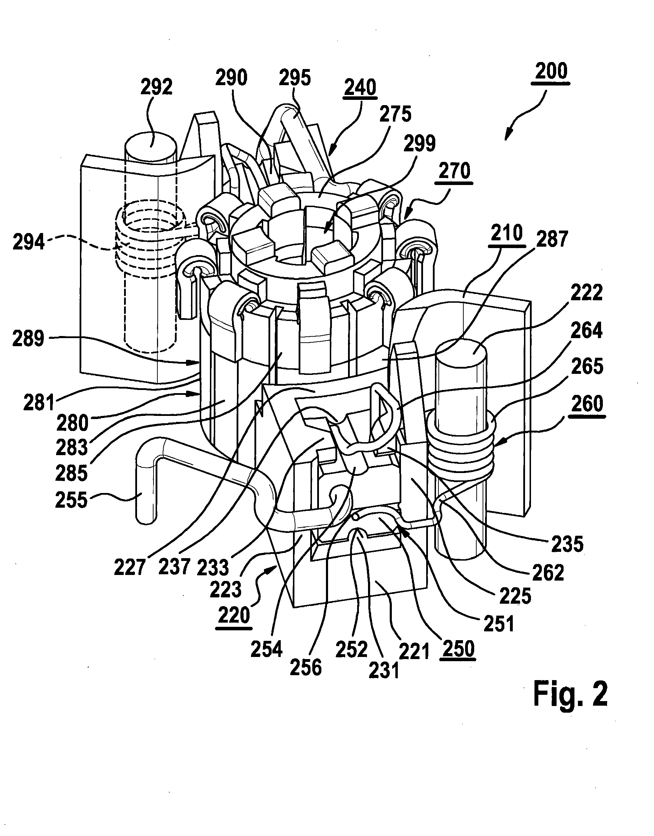

Fig. 2 zeigt die gemäß einer ersten Ausführungsform ausgebildete Kommutierungsvorrichtung 200 von Fig. 1 mit dem den Kollektor 280 aufweisenden Kommutator 270 und dem zugeordneten Bürstenträger 210 von Fig. 1. Der Kommutator 270 weist illustrativ einen z. B. als Spritzgussteil ausgebildeten Träger 275 auf, an dem eine zumindest im Wesentlichen zentrale Öffnung 299 zum Durchgriff der Rotorwelle 122 von Fig. 1 ausgebildet ist, wobei die Rotorwelle 122 drehfest am Träger 275 befestigt ist. Am Außenumfang des Trägers 275 ist der Kollektor 280 angeordnet. Dieser weist illustrativ eine Vielzahl von ringförmig an dem Träger 275 angeordneten und befestigten Lamellen auf, die an ihrem Außenumfang eine Kollektorlauffläche 289 ausbilden. Zwecks Einfachheit und Übersichtlichkeit der Zeichnung sind hier nur vier dieser Lamellen mit den Bezugszeichen 281, 283, 285, 287 gekennzeichnet. An der Kollektorlauffläche 289 stellt der Kollektor 280 mit der Bürste 250 von Fig. 1 und illustrativ mit einer weiteren Bürste 290 einen Schleifkontakt zur Zuführung eines geeigneten Motorstroms über elektrische Leitungen 255, 295 zu den Bürsten 250, 290, von diesen zum Kollektor 280 und von diesem zur Wicklung 162 von Fig. 1 zur Bestromung des Kommutatormotors 110 von Fig. 1 her. Es wird jedoch darauf hingewiesen, dass die Funktionsweise eines geeigneten Kommutators aus dem Stand der Technik hinreichend bekannt ist. Somit wird hier zwecks Knappheit der Beschreibung auf eine eingehende Beschreibung der Funktionsweise des Kommutators 270 verzichtet.

Bevorzugt weist mindestens eine der Bürsten 250, 290 kohlehaltiges Material auf und ist z. B. nach Art einer Kohlebürste ausgebildet. Deshalb werden die Bürsten 250, 290 nachfolgend auch als "Kohlebürsten" bezeichnet. Diese Kohlebürsten 250, 290 sind in zugeordneten Bürstenhaltern 220, 240 angeordnet und weisen jeweils eine Bürstenbreite auf, die z. B. im Bereich von 1,8 mm bis 3,0 mm liegt.

Illustrativ sind die Bürstenhalter 220, 240 nach Art von Köchern mit einer Kulissenführung zur Aufnahme und Führung der Kohlebürsten 250 bzw. 290 ausgebildet, um diese wie oben beschrieben an der Kollektorlauffläche 289 in Schleifkontakt mit den Lamellen 281, 283, 285, 287 zu bringen. Hierbei sind die Bürstenhalter 220, 240 bevorzugt SLC-(sensorless control)-fähig ausgebildet, um somit eine Sensorlose Steuerung des Kommutatormotors 110 von Fig. 1 zu ermöglichen. Hierzu sind die Bürstenhalter 220, 240 derart an dem Bürstenträger 210 ausgebildet, dass diese eine Anordnung der Kohlebürsten 250 bzw. 290 in einem vorgegebenen Bürstenwinkel zueinander ermöglichen. Dieser Bürstenwinkel beträgt illustrativ etwa 180°, um im Betrieb des Kommutatormotors 110 von Fig. 1 eine Entstehung von zur Positionserfassung bzw. zur Drehstellungserfassung des Rotors 160 von Fig. 1 geeigneten Kommutierungsstromrippeln zu ermöglichen.

Den Bürstenhaltern 220, 240 ist beispielhaft jeweils ein bolzenartiges Befestigungselement 222 bzw. 292 zugeordnet. Diese Befestigungsbolzen 222, 292 dienen zur Befestigung bzw. zum Abstützen von Federelementen 260 bzw. 294, wie unten stehend beschrieben.

Es wird jedoch darauf hingewiesen, dass die Bürstenhalter 220, 240, die Federelemente 260, 294 und die Kohlebürsten 250, 290 bevorzugt jeweils einen zumindest im Wesentlichen übereinstimmenden Aufbau und somit eine zumindest im Wesentlichen übereinstimmende Funktionalität aufweisen, wobei Abweichungen innerhalb zugelassener Töleranzen möglich sind, sodass nachfolgend zwecks Einfachheit und Knappheit der Beschreibung lediglich der Bürstenhalter 220, das diesem zugeordnete Federelement 260 und die diesem zugeordnete Kohlebürste 250 eingehend beschrieben werden.

Gemäß der Ausführungsform nach Anspruch 1 ist der Bürstenhalter 220 einstückig mit dem Bürstenträger 210 ausgebildet und weist zwei laterale Führungsflächen 223, 225 auf, die zumindest über eine Auflagefläche 221 miteinander verbunden sind. Hierbei sind die lateralen Führungsflächen 223, 225 erfindungsgemäß senkrecht zur Auflagefläche 221 angeordnet. Beispielhaft ist an der Führungsfläche 223 ein Führungsvorsprung 233 und an der Führungsfläche 225 ein Führungsvorsprung 235 ausgebildet. Die Auflagefläche 221 dient zur Auflage der Kohlebürste 250 und hat mindestens einen ersten, in radialer Richtung des Kollektors 280 ausgerichteten Führungssteg 231. Darüber hinaus sind die zwei lateralen Führungsflächen 223, 225 illustrativ über mindestens einen der Auflagefläche 221 gegenüberliegenden Verbindungssteg 227 miteinander verbunden. An diesem Verbindungssteg 227 ist beispielhaft mindestens ein zweiter in radialer Richtung des Kollektors 280 ausgerichteter Führungssteg 237 ausgebildet.

Die Führungsstege 231, 237 sind bevorzugt zur zumindest im Wesentlichen spielfreien Führung der Kohlebürste 250 ausgebildet, wobei ein innerhalb vorgegebener Toleranzen vorliegendes Spiel zulässig sein kann. Hierzu sind an der Kohlebürste 250 illustrativ eine erste Führungsnut 252 zur Führung am bzw. zur Aufnahme des Führungsstegs 231 und eine zweite Führungsnut 254 zur Führung am bzw. zur Aufnahme des Führungsstegs 237 ausgebildet. Darüber hinaus weist die Kohlebürste 250 an einem vom Kollektor 280 abgewandten axialen Ende 251 illustrativ eine optionale Aufnahmenut 256 auf. Diese dient zur zumindest abschnittsweisen Aufnahme eines Schenkels bzw. Federarms 262 des Federelements 260.

Das Federelement 260 ist beispielhaft nach Art einer Anpressfeder ausgebildet und wird deshalb nachfolgend auch als "Kohleanpressfeder" bezeichnet. Diese Kohleanpressfeder 260 ist zumindest zur Beaufschlagung der Kohlebürste 250 mit einer vorgegebenen, nachfolgend auch als "Vorschubkraft" bezeichneten Federkraft in Richtung des Kollektors 280 ausgebildet, um dort einen erforderlichen Anpressdruck der Kohlebürste 250 zu gewährleisten. Darüber hinaus kann die Kohleanpressfeder 260 zum Niederhalten der Kohlebürste 250 mit einer vorgegebenen, nachfolgend auch als "Niederhaltekraft" bezeichneten Federkraft in dem Bürstenhalter 220 ausgebildet sein, um ein Ausrutschen der Kohlebürste 250 aus dem Bürstenhalter 220 zu verhindern, wobei die Kohleanpressfeder 260 zumindest bereichsweise in die Führungsnut 254 der Kohlebürste 250 eingreift, wie unten stehend beschrieben.

Gemäß einer Ausführungsform ist die Kohleanpressfeder 260 nach Art einer Schenkelfeder ausgebildet und hat mindestens einen z. B. tangential zum Kollektor 280 ausgerichteten, z. B. spiralförmig ausgebildeten Federkörper 265, der illustrativ an dem Befestigungsbolzen 222 gehalten wird bzw. befestigt ist. An den Federkörper 265 sind beispielhaft der Schenkel bzw. Federarm 262 zur Beaufschlagung der Kohlebürste 250 mit der Vorschubkraft sowie ein weiterer Schenkel bzw. Federarm 264 zur Beaufschlagung der Kohlebürste 250 mit der Niederhaltekraft angeformt bzw. einstückig mit diesem ausgebildet. Illustrativ greift der Federarm 262 wie oben beschrieben in die optionale Aufnahmenut 256 der Kohlebürste 250 ein und der Federarm 264 greift wie oben beschrieben in die Führungsnut 254 der Kohlebürste 250 ein.

Es wird darauf hingewiesen, dass die einstückige Ausgestaltung der Kohleanpressfeder 260 mit Funktionstrennung Vorschubkraft-Niederhaltekraft lediglich beispielhaften Charakter hat und nicht als Einschränkung der Erfindung zu verstehen ist. Diese kann vielmehr auch mehrteilig ausgeführt sein, wobei für jede Funktion ein oder mehrere zugeordnete Bauteile Anwendung finden können.

Bei einer beispielhaften Montage der Kohlebürste 250 am Bürstenträger 210 wird diese zunächst mit ihrem dem axialen Ende 251 gegenüberliegenden axialen Ende derart auf der Auflagefläche 221 des Bürstenhalters 220 positioniert, dass deren Führungssteg 231 in die Führungsnut 252 der Kohlebürste 250 eingreift. Dann wird die Kohlebürste 250 unter den Führungsvorsprüngen 233, 235 hindurch in den Bürstenhalter 220 in Richtung des Kollektors 280 geschoben, wobei die Führungsnut 252 am Führungssteg 231 geführt wird, bis der am Verbindungssteg 227 ausgebildete Führungssteg 237 in die Führungsnut 254 der Kohlebürste 250 eingreift und die Kohlebürste 250 am Kollektor 280 anliegt. Dann wird der Federarm 262 der Kohleanpressfeder 260 gegen das axiale Ende 251 oder in die optionale Aufnahmenut 256 angelegt bzw. eingeführt und der Federarm 264 in die Führungsnut 254. Es wird jedoch darauf hingewiesen, dass die Federarme 262, 264 bereits beim Einschieben der Kohlebürste 250 in den Bürstenhalter 220 in die Nuten 256 bzw. 254 eingreifen können, um somit ein korrektes Einschieben der Kohlebürste 250 zu gewährleisten.

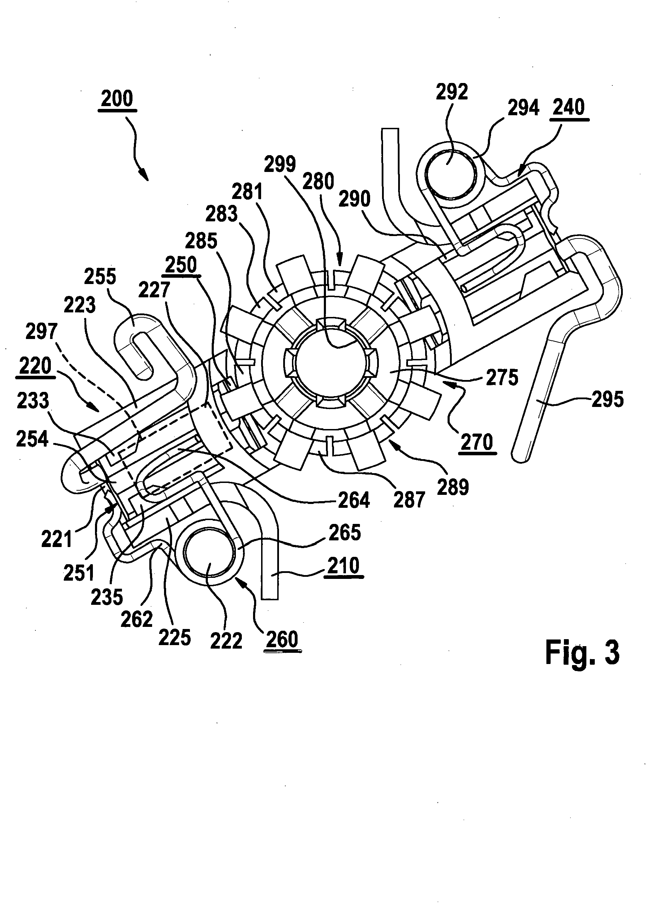

Fig. 3 zeigt die Kommutierungsvorrichtung 200 von Fig. 2 mit dem Bürstenträger 210 zur Verdeutlichung einer beispielhaften Kontaktierung des Kollektors 280 durch die Kohlebürsten 250, 290. Darüber hinaus ist in Fig. 2 eine beispielhafte, optional an der Auflagefläche 221 ausgebildete Durchgriffsöffnung 297 angedeutet. Diese dient dazu, um bei einer Herstellung des als einstückiges Spritzgussteil ausgebildeten Bürstenträgers 210, z. B. durch Kunststoffspritzen, eine Verwendung eines sogenannten Auf-Zu-Spritzgusswerkzeugs zu ermöglichen, d. h. eines schieberlosen Spritzgusswerkzeugs. Somit können die Bürstenhalter 220, 240 derart an dem Bürstenträger 210 ausgebildet werden, dass z. B. ein maximaler Winkelversatz des vorgegebenen Bürstenwinkels von weniger als 0,5° erreicht werden kann.

Es wird jedoch darauf hingewiesen, dass die Durchgriffsöffnung 297 lediglich zur besseren Sichtbarkeit in Fig. 2 vergleichsweise großflächig und zumindest im Wesentlichen fast vollständig die Auflagefläche 221 umfassend ausgebildet ist. Eine derartige Ausbildung hat jedoch nur beispielhaften Charakter und ist nicht als Einschränkung der Erfindung zu verstehen. Diese kann vielmehr sowohl ohne die Durchgriffsöffnung 297, als auch mit einer Durchgriffsöffnung mit veränderter Position und veränderten Abmessungen realisiert werden. Z. B. könnte die Durchgriffsöffnung 297 ausschließlich im Bereich des Verbindungsstegs 227 mit entsprechend reduzierten Abmessungen an der Auflagefläche 221 ausgebildet sein.

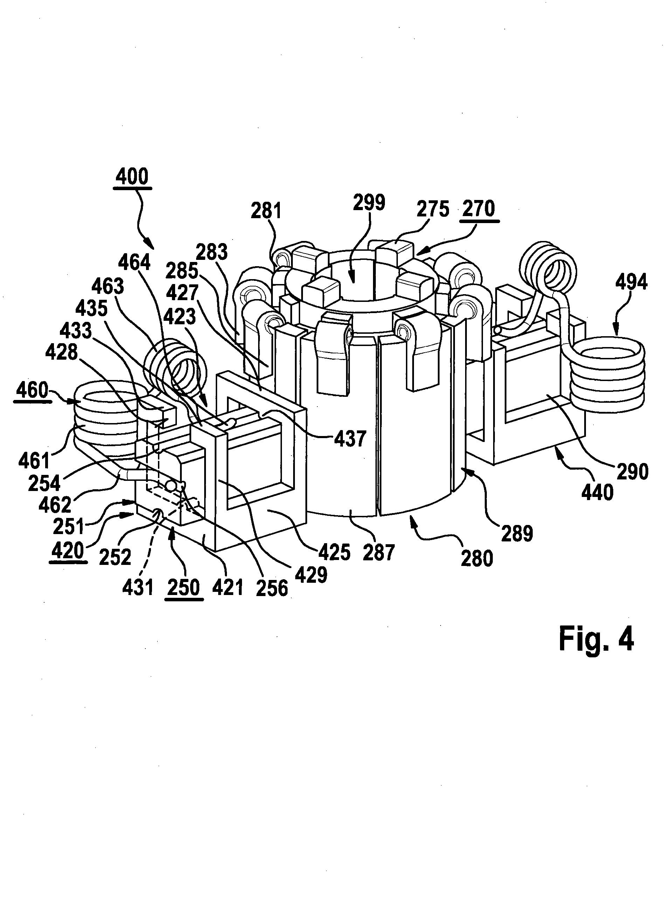

Fig. 4 zeigt eine gemäß einer zweiten Ausführungsform ausgebildete Kommutierungsvorrichtung 400 mit dem den Kollektor 280 aufweisenden Kommutator 270 von Fig. 1 und zugeordneten Bürstenhaltern 420, 440, an denen die Kohlebürsten 250 bzw. 290 von Fig. 2 und 3 sowie Kohleanpressfedern 460 bzw. 494 angeordnet sind. Zwecks Übersichtlichkeit und Einfachheit der Zeichnung wurde hier auf eine Darstellung eines vollständigen Bürstenträgers mit zugeordneten Befestigungsbolzen wie bei Fig. 2 verzichtet. Darüber hinaus wird darauf hingewiesen, dass die Bürstenhalter 420, 440 und die Kohleanpressfedern 460, 494 bevorzugt jeweils einen zumindest im Wesentlichen übereinstimmenden Aufbau aufweisen, wobei Abweichungen innerhalb zugelassener Toleranzen möglich sind, sodass nachfolgend zwecks Einfachheit und Knappheit der Beschreibung lediglich der Bürstenhalter 420 und die diesem zugeordnete Kohleanpressfeder 460 eingehend beschrieben werden. Des Weiteren wird darauf hingewiesen, dass die Funktionalität der Bürstenhalter 420, 440 und der Kohleanpressfedern 460, 494 mit der Funktionalität der Bürstenhalter 220, 240 und der Kohleanpressfedern 260, 294 von Fig. 2 übereinstimmt, sodass nachfolgend zwecks Knappheit der Beschreibung auf eine eingehende Beschreibung dieser Funktionalität verzichtet wird.

Gemäß einer Ausführungsform weist der Bürstenhalter 420 zwei laterale Führungsabschnitte 423, 425 auf, die zumindest über eine Auflagefläche 421 miteinander verbunden sind. Hierbei sind die lateralen Führungsabschnitte 423, 425 illustrativ senkrecht zur Auflagefläche 421 angeordnet, können alternativ hierzu jedoch in einem beliebigen Winkel zur Auflagefläche 421 angeordnet sein. Die Auflagefläche 421 dient zur Auflage der Kohlebürste 250 und hat mindestens einen ersten, in radialer Richtung des Kollektors 280 ausgerichteten Führungssteg 431. Darüber hinaus ist an jedem der lateralen Führungsabschnitte 423, 425 etwa im Bereich des axialen Endes 251 der Kohlebürste 250 illustrativ ein umgedreht L-förmig ausgebildetes Führungsglied 428 bzw. 429 ausgebildet, wobei das Führungsglied 428 beispielhaft einen Führungsvorsprung 433 und das Führungsglied 429 beispielhaft einen Führungsvorsprung 435 ausbildet. Darüber hinaus sind die zwei lateralen Führungsabschnitte 423, 425 illustrativ über mindestens einen der Auflagefläche 421 gegenüberliegenden Verbindungssteg 427 miteinander verbunden, an dem beispielhaft mindestens ein zweiter in radialer Richtung des Kollektors 280 ausgerichteter Führungssteg 437 ausgebildet ist.

Die bevorzugt einstückige Kohleanpressfeder 460 hat beispielhaft mindestens einen ersten, tangential zum Kollektor 280 ausgerichteten und z. B. spiralförmig ausgebildeten Federkörper 461, an dem illustrativ ein Schenkel bzw. Federarm 462 zur Beaufschlagung der Kohlebürste 250 mit einer zugeordneten Vorschubkraft ausgebildet ist. Darüber hinaus ist an dem Federkörper 461 illustrativ ein zweiter z. B. spiralförmig ausgebildeter Federkörper 463 angeordnet, der ebenfalls beispielhaft tangential zum Kollektor 280 und darüber hinaus etwa senkrecht zum ersten Federkörper 461 ausgebildet ist. An diesem zweiten Federkörper 463 ist gemäß einer Ausführungsform ein weiterer Schenkel bzw. Federarm 464 zur Beaufschlagung der Kohlebürste 250 mit einer zugeordneten Niederhaltekraft ausgebildet.

## Patentansprüche

1. Kommutatormotor (110) mit einem Kommutator (270), der einen an einer Kollektorlauffläche (289) in Schleifkontakt mit zugeordneten Bürsten (250, 290) stehenden Kollektor (280) aufweist, wobei mindestens eine Bürste (250) in einem zugeordneten Bürstenhalter (220) angeordnet ist, wobei der Bürstenhalter (220) mindestens einen in radialer Richtung des Kollektors (280) ausgerichteten Führungssteg (231, 237) aufweist, der in mindestens eine an der mindestens einen Bürste (250) vorgesehene Führungsnut (252, 254) eingreift, **dadurch gekennzeichnet, dass** der Bürstenhalter (220) einstückig mit einem Bürstenträger (210) als Spritzgussteil ausgebildet ist, und der Bürstenhalter (220) zwei laterale Führungsflächen (223, 225) aufweist, die zumindest über eine Auflagefläche (221) zur Auflage der mindestens einen Bürste (250) miteinander verbunden sind, und die lateralen Führungsflächen (223, 225) senkrecht zur Auflagefläche (221) angeordnet sind, und die Auflagefläche (221) eine Durchgriffsöffnung (297) aufweist.

2. Kommutatormotor nach Anspruch 1, wobei an der Auflagefläche (221) mindestens ein erster in radialer Richtung des Kollektors (280) ausgerichteter Führungssteg (231) ausgebildet ist.

3. Kommutatormotor nach Anspruch 1 oder 2, **dadurch gekennzeichnet, dass** der Bürstenträger (210) mittels eines Auf-Zu-Werkzeugs, d.h. einem schieberlosen Spritzgusswerkzeug herstellbar ist.

4. Kommutatormotor nach Ansprüchen 1 bis 3, **dadurch gekennzeichnet, dass** die zwei lateralen Führungsflächen (223, 225) über mindestens einen der Auflagefläche (221) gegenüberliegenden Verbindungssteg (227) miteinander verbunden sind, an dem mindestens ein zweiter in radialer Richtung des Kollektors (280) ausgerichteter Führungssteg (237) ausgebildet ist.

5. Kommutatormotor nach einem der vorhergehenden Ansprüche, **dadurch gekennzeichnet, dass** dem Bürstenhalter (220) mindestens ein Federelement (260) zum Niederhalten der mindestens einen Bürste (250) mit einer ersten vorgegebenen Federkraft in dem Bürstenhalter (220) zugeordnet ist, wobei das Federelement (260) zumindest bereichsweise in die mindestens eine an der mindestens einen Bürste (250) vorgesehene Führungsnut (254) eingreift.

6. Kommutatormotor nach Anspruch 5, **dadurch gekennzeichnet, dass** das mindestens eine Federelement (260) zur Beaufschlagung der mindestens einen Bürste (250) mit einer zweiten vorgegebenen Federkraft in Richtung des Kollektors (280) ausgebildet ist.

7. Kommutatormotor nach Anspruch 5 oder 6, **dadurch gekennzeichnet, dass** das mindestens eine Federelement (260) mindestens einen tangential zum Kollektor (280) ausgerichteten Federkörper (265) aufweist.

8. Kommutatormotor nach Anspruch 7, **dadurch gekennzeichnet, dass** an dem mindestens einen Federkörper (265) ein erster Federarm (264) zur Beaufschlagung der mindestens einen Bürste (250) mit der ersten vorgegebenen Federkraft und ein zweiter Federarm (262) zur Beaufschlagung der mindestens einen Bürste (250) mit der zweiten vorgegebenen Federkraft vorgesehen sind.

9. Kommutatormotor nach Anspruch 8, **dadurch gekennzeichnet, dass** die mindestens eine Bürste (250) an einem dem zweiten Federarm (262) zugewandten axialen Ende (251) eine Aufnahmenut (256) zur zumindest abschnittsweisen Aufnahme des zweiten Federarms (262) aufweist.

10. Antriebsvorrichtung (100) mit einem Kommutatormotor (110) nach einem der Ansprüche 1 bis 9.

## Claims

1. Commutator motor (110) with a commutator (270), which has a collector (280) which on a collector running surface (289) is in sliding contact with assigned brushes (250, 290), wherein at least one brush (250) is arranged in an assigned brush holder (220), wherein the brush holder (220) has at least one guiding web (231, 237), which is aligned in the radial direction of the collector (280) and engages in at least one guiding groove (252, 254) provided on the at least one brush (250), **characterized in that** the brush holder (220) is formed in one piece with a brush carrier (210) as an injection-moulded part, and the brush holder (220) has two lateral guiding surfaces (223, 225), which are connected to one another at least by way of a resting surface (221) for the at least one brush (250) to rest on, and the lateral guiding surfaces (223, 225) are arranged perpendicularly in relation to the resting surface (221), and the resting surface (221) has a passage opening (297).

2. Commutator motor according to Claim 1, wherein at least a first guiding web (231) that is aligned in the radial direction of the collector (280) is formed on the resting surface (221).

3. Commutator motor according to Claim 1 or 2, **characterized in that** the brush carrier (210) can be produced by means of an open/close mould, i.e. a slideless injection mould.

4. Commutator motor according to Claims 1 to 3, **characterized in that** the two lateral guiding surfaces (223, 225) are connected to one another by way of at least one connecting web (237), which lies opposite the resting surface (221) and on which there is formed at least a second guiding web (231) that is aligned in the radial direction of the collector (280).

5. Commutator motor according to one of the preceding claims, **characterized in that** the brush holder (220) is assigned at least one spring element (260) for holding down the at least one brush (250) with a first predetermined spring force in the brush holder (220), wherein the spring element (260) engages at least in certain regions in the at least one guiding groove (254) that is provided on the at least one brush (250).

6. Commutator motor according to Claim 5, **characterized in that** the at least one spring element (260) is designed for acting on the at least one brush (250) with a second predetermined spring force in the direction of the collector (280).

7. Commutator motor according to Claim 5 6, **characterized in that** the at least one spring element (260) has at least one spring body (265) aligned tangentially in relation to the collector (280).

8. Commutator motor according to Claim 7, **characterized in that** on the at least one spring body (265) there is provided a first spring arm (264) for acting on the at least one brush (250) with the first predetermined spring force and there is provided a second spring arm (262) for acting on the at least one brush (250) with the second predetermined spring force.

9. Commutator motor according to Claim 8, **characterized in that** the at least one brush (250) has at an axial end (251) that is facing the second spring arm (262) a receiving groove (256) for receiving at least certain portions of the second spring arm (262).

10. Drive device (100) with a commutator motor (110) according to one of Claims 1 to 9.

## Revendications

1. Moteur à commutateur (110) comprenant un commutateur (270) qui présente un collecteur (280) en contact glissant avec des balais associés (250, 290) sur une surface de collecteur (289), au moins un balai (250) étant disposé dans un porte-balais associé (220), le porte-balais (220) présentant au moins une nervure de guidage (231, 237) orientée dans la direction radiale du collecteur (280), qui s'engage dans au moins une nervure de guidage (252, 254) prévue au niveau de l'au moins un balai (250), **caractérisé en ce que** le porte-balais (220) est réalisé d'une seule pièce avec un support de balai (210) en tant que pièce moulée par injection et le porte-balais (220) présente deux surfaces de guidage latérales (223, 225) qui sont connectées l'une à l'autre au moins par le biais d'une surface d'appui (221) pour l'appui de l'au moins un balai (250), et les surfaces de guidage latérales (223, 225) sont disposées perpendiculairement à la surface d'appui (221) et la surface d'appui (221) présente une ouverture traversante (297).

2. Moteur à commutateur selon la revendication 1, dans lequel au moins une première nervure de guidage (231) orientée dans la direction radiale du collecteur (280) est réalisée sur la surface d'appui (221).

3. Moteur à commutateur selon la revendication 1 ou 2, **caractérisé en ce que** le support de balai (210) peut être fabriqué au moyen d'un outil de type ouvert-fermé, c'est-à-dire d'un outil de moulage par injection sans tiroir.

4. Moteur à commutateur selon les revendications 1 à 3, **caractérisé en ce que** les deux surfaces de guidage latérales (223, 225) sont connectées l'une à l'autre par le biais d'au moins une nervure de connexion (227) opposée à la surface d'appui (221), au niveau de laquelle est réalisée au moins une deuxième nervure de guidage (237) orientée dans la direction radiale du collecteur (280).

5. Moteur à commutateur selon l'une quelconque des revendications précédentes, **caractérisé en ce qu'**au moins un élément de ressort (260) pour maintenir vers le bas l'au moins un balai (250) avec une première force de ressort prédéfinie dans le porte-balais (220) est associé au porte-balais (220), l'élément de ressort (260) s'engageant au moins en partie dans l'au moins une rainure de guidage (254) prévue sur l'au moins un balai (250).

6. Moteur à commutateur selon la revendication 5, **caractérisé en ce que** l'au moins un élément de ressort (260) est réalisé de manière à solliciter l'au moins un balai (250) avec une deuxième force de ressort prédéfinie dans la direction du collecteur (280).

7. Moteur à commutateur selon la revendication 5 ou 6, **caractérisé en ce que** l'au moins un élément de ressort (260) présente au moins un corps de ressort (265) orienté tangentiellement par rapport au collecteur (280).

8. Moteur à commutateur selon la revendication 7, **caractérisé en ce que** sur l'au moins un corps de ressort (265) sont prévus un premier bras de ressort (264) pour solliciter l'au moins un balai (250) avec la première force de ressort prédéfinie et un deuxième bras de ressort (262) pour solliciter l'au moins un balai (250) avec la deuxième force de ressort prédéfinie.

9. Moteur à commutateur selon la revendication 8, **caractérisé en ce que** l'au moins un balai (250) présente, au niveau d'une extrémité axiale (251) tournée vers le deuxième bras de ressort (262), une rainure de réception (256) pour recevoir au moins en partie le deuxième bras de ressort (262).

10. Dispositif d'entraînement (100) comprenant un moteur à commutateur (110) selon l'une quelconque des revendications 1 à 9.
